(19) Europäisches Patentamt
European Patent Office
Office européen des brevets

(11) Veröffentlichungsnummer: **0 403 921 B1**

(12) # EUROPÄISCHE PATENTSCHRIFT

(45) Veröffentlichungstag der Patentschrift: **02.11.94**

(51) Int. Cl.5: **C08G 18/32**, C08G 18/67, C09D 175/04

(21) Anmeldenummer: **90111036.1**

(22) Anmeldetag: **12.06.90**

Die Akte enthält technische Angaben, die nach dem Eingang der Anmeldung eingereicht wurden und die nicht in dieser Patentschrift enthalten sind.

(54) **Verfahren zur Herstellung von Überzügen.**

(30) Priorität: **23.06.89 DE 3920574**

(43) Veröffentlichungstag der Anmeldung:
**27.12.90 Patentblatt 90/52**

(45) Bekanntmachung des Hinweises auf die Patenterteilung:
**02.11.94 Patentblatt 94/44**

(84) Benannte Vertragsstaaten:
**AT BE CH DE ES FR GB IT LI NL SE**

(56) Entgegenhaltungen:
**DE-A- 2 158 945**
**FR-A- 1 568 951**
**FR-A- 2 387 961**
**US-A- 3 814 776**

(73) Patentinhaber: **BAYER AG**

**D-51368 Leverkusen (DE)**

(72) Erfinder: **Zwiener, Christian, Dr.**
**Hittorfstrasse 9**
**D-5000 Köln 60 (DE)**
Erfinder: **Pedain, Josef, Dr.**
**Haferkamp 6**
**D-5000 Köln 80 (DE)**
Erfinder: **Kahl, Lothar, Dr.**
**Schützheiderweg 27**
**D-5060 Bergisch Gladbach 2 (DE)**
Erfinder: **Nachtkamp, Klaus, Dr.**
**Silcherstrasse 13**
**D-4000 Düsseldorf 13 (DE)**

**EP 0 403 921 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zur Herstellung von Überzügen auf beliebigen Substraten unter Verwendung eines Beschichtungsmittels, welches als Bindemittel ein Zweikomponenten-System aus einer Polyisocyanatkomponente und einer speziellen, gegenüber Isocyanatgruppen reaktionsfähigen Reaktivkomponente enthält.

Zweikomponenten-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente, enthalten, sind seit langem bekannt. Sie eignen sich zur Herstellung von hochwertigen Überzügen, die hart, elastisch, abrieb- und lösungsmittelbeständig und vor allem auch witterungsstabil eingestellt werden können.

Bei dem nachstehend näher beschriebenen erfindungsgemäßen Verfahren werden neuartige Zweikomponenten-Beschichtungsmittel eingesetzt, deren Bindemittel aus einem Zweikomponenten-System aus einer Polyisocyanatkomponente und einer gegenüber Isocyanatgruppen reaktionsfähigen Reaktivkomponente besteht, wobei diese Reaktivkomponente sich ganz oder teilweise aus bestimmten, nachstehend näher beschriebenen sekundären Polyaminen zusammensetzt. Die beim nachstehend näher beschriebenen erfindungsgemäßen Verfahren ablaufende chemische Reaktion wird zwar bereits in der DE-OS 1 670 812 erwähnt jedoch nur als Zwischenstufe bei der Herstellung von Hydantoinen, bei welcher die Umsetzungsprodukte aus organischem Polyisocyanat und sekundärem Polyamin der auch erfindungsgemäß eingesetzten Art gleichzeitig oder unmittelbar im Anschluß an ihre Herstellung unter Ausbildung des Hydantoinrings weiterumgesetzt werden. Irgendwelche Hinweise, die genannte Umsetzung zwischen organischen Polyisocynaten und sekundären Aminen zur Aushärtung von Zweikomponenten-Beschichtungsmitteln zu nutzen, werden nicht gemacht.

Die beim erfindungsgemäßen Verfahren eingesetzten Systeme vereinigen in sich eine Reihe bemerkenswerter Vorteile. Sie eignen sich insbesondere als Bindemittel in lösungsmittelarmen oder -freien Beschichtungsmitteln und ermöglichen eine rasche Aushärtung der Beschichtungen durch eine bei maximal 80 ° C ablaufende chemische Vernetzungsreaktion.

Gegenstand der Erfindung ist ein Verfahren zur Herstellung von Überzügen durch Beschichtung beliebiger Substrate mit einem Beschichtungsmittel, welches als Bindemittel ein Zweikomponenten-System aus

a) einer Polyisocyanatkomponente und

b) einer gegenüber Polyisocyanaten reaktionsfähigen Reaktivkomponente,

sowie gegebenenfalls die aus der Beschichtungstechnologie bekannten Hilfs- und Zusatzmittel enthält, dadurch gekennzeichnet, daß die Bindemittelkomponente b) aus

b1) Verbindungen der allgemeinen Formel

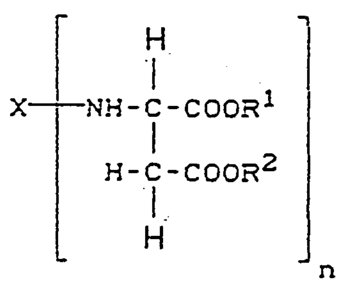

oder aus Gemischen derartiger Verbindungen mit

b2) aus der Polyurethanchemie an sich bekannten, Hydroxylgruppen aufweisenden Verbindungen in einer solchen Menge, daß auf jede sekundäre Aminogruppe der Komponente b1) bis zu 20 Hydroxylgruppen entfallen,

besteht, wobei das Äquivalentverhältnis von Isocyanatgruppen zu gegenüber Isocyanatgruppen reaktionsfähigen Gruppen bei 0,8 : 1 bis 20 : 1 liegt und die Aushärtung nach erfolgter Applikation auf dem Substrat bei Temperaturen von -20 bis +80 ° C erfolgt, wobei in der genannten allgemeinen Formel

X für einen n-wertigen organischen Rest steht, der durch Entfernung der Aminogruppen aus einem Polyamin, ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan 1,11-Diaminoundecan, 1,12-Diaminododecan,

1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexylmethan, 2,4,4'-Triamino-5-methyl-dicyclohexylmethan und Polyetherpolyaminen mit aliphatisch gebundenen primären Aminogruppen mit einem Molekulargewicht von 148 bis 6000 erhalten werden kann,

$R^1$ und $R^2$ für gleiche oder verschiedene organische Reste stehen, die unter den Reaktionsbedingungen gegenüber Isocyanatgruppen inert sind, mit der Maßgabe, daß $R^1$ und $R^2$ Ethyl sind, wenn X für den Rest steht, der durch Entfernung der Aminogruppen aus 2,4,4'-Triamino-5-methyl-dicyclohexylmethan erhalten worden ist und

n für eine ganze Zahl von mindestens 2 steht.

Die beim erfindungsgemäßen Verfahren ablaufende Vernetzung beruht auf einer Additionsreaktion zwischen der Polyisocyanatkomponente a) und der Reaktivkomponente b), insbesondere den Polyaminen b1) mit sekundären Aminogruppen, die auch als "Polyasparaginsäurederivate" angesehen werden können. Diese Umsetzung ist aus der DE-OS 2 158 945 im Prinzip bereits bekannt, jedoch wird sie gemäß der Lehre dieser Vorveröffentlichung nicht zur Vernetzung von Zweikomponenten-Beschichtungsmitteln auf dem beschichteten Substrat bei relativ niedrigen Temperaturen herangezogen sondern dient vielmehr zur Herstellung von Zwischenprodukten, die bei erhöhter Temperatur zu heterocyclischen Endprodukten umgesetzt werden, die die eigentlichen Verfahrensprodukte der Vorveröffentlichung darstellen. Erst die Überführung der genannten Zwischenprodukte in die genannten heterocyclischen Endprodukte kann gemäß der Lehre der Vorveröffentlichung bei der Herstellung von entsprechenden Überzügen auf dem beschichteten Substrat erfolgen. Der Gedanke, bereits die spontan ablaufende Reaktion zwischen Isocyanatgruppen und sekundären Aminogruppen als wesentliche Reaktion bei der Aushärtung eines Zweikomponenten-Beschichtungsmittels auf dem Substrat heranzuziehen bzw. die Herstellbarkeit von hochwertigen Überzügen unter Nutzung dieser Additionsreaktion wurden in der genannten Vorveröffentlichung nicht angesprochen. Diesbezüglich besteht zwischen der DE-OS 2 158 945 und der, Hydantoine betreffenden DE-OS 1 670 813 kein prinzipieller Unterschied.

Für das erfindungsgemäße Verfahren kommen als Polyisocyanatkomponente a) im Prinzip alle aus der Polyurethanchemie bekannten Polyisocyanate in Betracht. Beispielsweise gut geeignet sind niedermolekulare Polyisocyanate des Molekulargewichtsbereichs 168 bis 300 wie beispielsweise Hexamethylendiisocyanat, 2,2,4- und/oder 2,4,4-Trimethyl-1,6-hexamethylendiisocyanat, Dodecamethylendiisocyanat, 1,4-Diisocyanatocyclohexan, 1-Isocyanato-3,3,5-trimethyl-5-isocyanatomethyl-cyclohexan (IPDI), 2,4′- und/oder 4,4′-Diisocyanato-dicyclohexylmethan, 2,4′- und/oder 4,4′-Diisocyanato-diphenylmethan oder Gemische dieser Isomeren mit ihren höheren Homologen, wie sie in an sich bekannter Weise durch Phosgenierung von Anilin/Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören beispielsweise Biuretgruppen aufweisende Polyisocyanate, wie sie beispielsweise in US-PS 3 124 605, US-PS 3 201 372 oder DE-OS 1 101 394 beschrieben sind, Isocyanuratgruppen aufweisende Polyisocyanate, wie sie z.B. in der US-PS 3 001 973, in den DE-PS 1 022 789, 1 222 067 und 1 027 394 sowie in den DE-OS 1 929 034 und 2 004 048 beschrieben werden, Urethangruppen aufweisende Polyisocyanate, wie sie z.B. in der DE-OS 953 012, der BE-PS 752 261 oder in den US-PS 3 394 164 und 3 644 457 beschrieben werden, Carbodiimidgruppen aufweisende Polyisocyanate, wie sie in der DE-PS 1 092 007, in der US-PS 3 152 162 sowie in den DE-OS 2 504 400, 2 537 685 und 2 552 350 beschrieben werden und Allophanatgruppen aufweisende Polyisocyanate, wie sie z.B. in der GB-PS 994 890, in der BE-PS 761 626 und in der NL-OS 7 102 524 beschrieben werden.

Zu den besonders bevorzugten modifizierten Polyisocyanaten gehören das N,N′,N″-Tris-(-6-isocyanatohexyl)-biuret und seine Gemische mit seinen höheren Homologen, sowie das N,N′,N″-Tris-(-6-isocyanatohexyl)-isocyanurat bzw. dessen Gemische mit seinen höheren, mehr als einen Isocyanuratring aufweisenden Homologen.

Weiterhin bevorzugt werden als Polyisocyanatkomponente a) Isocyanatgruppen aufweisende Prepolymere bzw. Semiprepolymere auf Basis der beispielhaft genannten einfachen oder modifizierten Polyisocyanate einerseits und organischen Polyhydroxylverbindungen andererseits eingesetzt. Diese Prepolymeren bzw. Semiprepolymeren weisen im allgemeinen einen NCO-Gehalt von 0,5 bis 30, vorzugsweise 1 bis 20 Gew.-% auf und werden in an sich bekannter Weise durch Umsetzung der genannten Ausgangsmaterialien unter Einhaltung eines NCO/OH-Äquivalentverhältnisses von 1,05:1 bis 10:1, vorzugsweise 1,1:1 bis 3:1 hergestellt, wobei sich im Anschluß an die Umsetzung gegebenenfalls eine destillative Entfernung von gegebenenfalls noch vorliegendem freiem flüchtigem Ausgangspolyisocyanat anschließt.

Zur Herstellung derartiger Prepolymerer bzw. Semiprepolymerer eignen sich niedermolekulare Polyhydroxylverbindungen des Molekulargewichtsbereichs 62 bis 299 wie beispielsweise Ethylenglykol, Propylenglykol, Trimethylolpropan, 1,6-Dihydroxyhexan, niedermolekulare, Hydroxylgruppen aufweisende Ester derartiger Polyole mit Dicarbonsäure der nachstehend beispielhaft genannten Art oder niedermolekulare Ethoxylierungs- und/oder Propoxylierungsprodukte derartiger einfacher Polyole oder beliebige Gemische derartiger mehrwertiger modifizierter oder nicht modifizierter Alkohole.

Vorzugsweise werden jedoch zur Herstellung der Prepolymeren bzw. Semiprepolymeren höhermolekulare Polyhydroxylverbindungen des Molekulargewichtsbereichs 300 bis 8000, vorzugsweise 1.000 bis 5.000, der aus der Polyurethanchemie an sich bekannten Art eingesetzt. Diese Polyhydroxylverbindungen tragen pro Molekül mindestens zwei Hydroxylgruppen und weisen im allgemeinen einen Hydroxylgruppengehalt von 0,5 bis 17, vorzugsweise 1 bis 5 Gew.-% auf.

Höhermolekulare Polyhydroxylverbindungen zur Herstellung der Prepolymeren bzw. Semiprepolymeren sind beispielsweise die den gemachten Angaben entsprechende Polyester-Polyole auf Basis von niedermolekularen einfachen Alkoholen der bereits beispielhaft genannten Art und mehrbasischen Carbonsäuren wie beispielsweise Adipinsäure, Sebacinsäure, Phthalsäure, Isophthalsäure, Tetrahydrophthalsäure, Hexahydrophthalsäure, Maleinsäure, den Anhydriden derartiger Säuren oder beliebigen Gemischen derartiger Säuren bzw. Säureanhydride. Auch den obigen Angaben entsprechende, Hydroxylgruppen aufweisende Polylactone, insbesondere Poly-$\epsilon$-caprolactone sind zur Herstellung der Prepolymeren bzw. Semiprepolymeren geeignet.

Zur Herstellung der Isocyanatgruppen aufweisenden Prepolymeren bzw. Semiprepolymeren ebenfalls gut geeignet sind die, obigen Ausführungen entsprechenden, Polyether-Polyole, wie sie in an sich bekannter Weise durch Alkoxylierung von geeigneten Startermolekülen zugänglich sind. Geeignete Startermoleküle sind beispielsweise die oben bereits genannten einfachen Polyole, Wasser, organische Polyamine mit mindestens zwei N-H-Bindungen oder beliebige Gemische derartiger Startermoleküle. Für die Alkoxylierungsreaktion geeignete Alkylenoxide sind insbesondere Ethylenoxid und/oder Propylenoxid, die in beliebiger Reihenfolge oder auch im Gemisch bei der Alkoxylierungsreaktion eingesetzt werden können.

Zur Herstellung der Prepolymeren bzw. Semiprepolymeren ferner geeignet sind die, obigen Ausführungen entsprechenden, Hydroxylgruppen aufweisenden Polycarbonate, wie sie beispielsweise durch Umsetzung von einfachen Diolen der oben bereits beispielhaft genannten Art mit Diarylcarbonaten, beispielsweise Diphenylcarbonat oder Phosgen hergestellt werden können.

Bei der erfindungswesentlichen Komponente b1) handelt es sich um Verbindungen der Formel

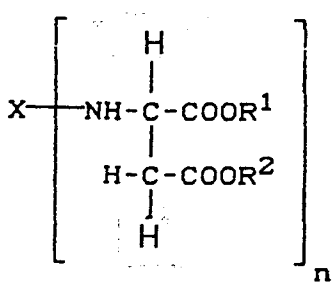 ,

für welche X, $R^1$, $R^2$ und n die bereits vorstehend genannte Bedeutung haben. Besonders bevorzugt werden solche "Polyasparaginsäurederivate" der genannten allgemeinen Formel eingesetzt, für welche

X für einen zweiwertigen Kohlenwasserstoffrest steht, wie er durch Entfernung der Aminogruppen aus 1,4-Diaminobutan, 1,6-Diaminohexan, 2,2,4- und 2,4,4-Trimethyl-1,6-diaminohexan, 1-Amino-3,3,5-trimethyl-5-aminomethyl-cyclohexan, 4,4'-Diamino-dicyclohexylmethan oder 3,3'-Dimethyl-4,4'-diaminodicyclohexylmethan erhalten wird, und

n für 2 steht.

Zu den bevorzugten Ausgangskomponenten b1) gehören im übrigen solche der genannten allgemeinen Formel, für welche $R^1$ und $R^2$ für Methyl- oder Ethylreste stehen.

Die Herstellung der Ausgangsverbindungen b1) erfolgt in an sich bekannter Weise durch Umsetzung der entsprechenden primären Polyamine der Formel

$X\text{-}(\text{-}NH_2)_n$

mit Malein- oder Fumarsäureestern der allgemeinen Formel

$R^1OOC-CH=CH-COOR^2$.

Geeignete Polyamine sind die bereits oben genannten Diamine und höhermolekularen Polyetherpolyamine, wie sie beispielsweise unter der Bezeichnung ®Jeffamin von der Firma Texaco vertrieben werden.

Zur Herstellung der Ausgangskomponenten b1) geeignete, Malein- oder Fumarsäureester sind beispielsweise Maleinsäure-dimethylester, -diethylester, -di-n-butylester und die entsprechenden Fumarsäureester.

Die Herstellung der "Polyasparaginsäurederivate" b1) aus den genannten Ausgangsmaterialien erfolgt beispielsweise innerhalb des Temperaturbereichs von 0 bis 100 °C unter Verwendung von solchen Mengenverhältnissen, daß auf jede primäre Aminogruppe mindesetns eine und vorzugsweise eine olefinische Doppelbindung entfällt, wobei im Anschluß an die Umsetzung, gegebenenfalls im Überschuß eingesetzte Ausgangsmaterialien destillativ abgetrennt werden können. Die Umsetzung kann in Substanz oder auch in Gegenwart von geeigneten Lösungsmitteln wie beispielsweise Methanol, Ethanol, Propanol oder Dioxan oder Gemischen derartiger Lösungsmittel erfolgen.

In den erfindungsgemäßen Beschichtungsmitteln liegen als Bindemittel Kombinationen der Polyisocyanatkomponente a) mit sekundären Polyaminen b1) oder Kombinationen aus einer Polyisocyanatkomponente a) mit einem Gemisch aus sekundären Polyaminen b1) und weiteren gegenüber Isocyanatgruppen reaktionsfähigen Verbindungen b2) vor.

Bei den gegebenenfalls mitverwendeten Verbindungen mit gegenüber Isocyanatgruppen reaktionsfähigen Gruppen handelt es sich vorzugsweise um organische Polyhydroxylverbindungen der aus der Polyurethanchemie an sich bekannten Art und zwar sowohl niedermolekulare als auch höhermolekulare Polyhydroxylverbindungen der bereits oben im Zusammenhang mit der Herstellung der Prepolymeren bzw. Semiprepolymeren beispielhaft genannten Art.

Besonders bevorzugt werden als Komponente b2) hydroxyfunktionelle Polyacrylate der aus der Polyurethanlacktechnologie an sich bekannten Art eingesetzt. Es handelt sich hierbei um Hydroxylgruppen aufweisende Copolymerisate olefinisch ungesättigter Verbindungen eines dampfdruck- bzw. membranosmometrisch bestimmten Molekulargewichts Mn von 800 bis 50.000, vorzugsweise 1000 bis 20.000 und insbesondere 5000 bis 10.000 mit einem Hydroxylgruppengehalt von 0,1 bis 12, vorzugsweise 1 bis 10 und insbesondere 2 bis 6 Gew.-%. Es handelt sich bei diesen Verbindungen um Copolymerisate von Hydroxylgruppen aufweisenden olefinischen Monomeren mit Hydroxylgruppen-freien olefinischen Monomeren Beispiele für geeignete Monomere sind Vinyl- bzw. Vinylidenmonomere wie z.B. Styrol, $\alpha$-Methylstyrol, o- bzw. p-Chlorstyrol, o-, m- oder p-Methylstyrol, p-tert.-Butylstyrol, Acrylsäure, (Meth)Acrylnitril, Acryl-und Methacrylsäureester mit 1 bis 8 Kohlenstoffatomen wie Alkoholkomponente wie beispielsweise Ethylacrylat, Methylacrylat, n- bzw. Isopropylacrylat, n-Butylacrylat, 2-Ethylhexylacrylat, 2-Ethylhexylmethacrylat, Isooctylacrylat, Methylmethacrylat, Ethylmethacrylat, Butylmethacrylat, Isooctylmethacrylat; Diester der Fumarsäure, Itaconsäure, Maleinsäure mit 4 bis 8 Kohlenstoffatomen in der Alkoholkomponente (Meth)-Acrylsäureamid, Vinylester von Alkanmonocarbonsäure mit 2 bis 5 Kohlenstoffatomen wie Vinylacetat oder Vinylpropionat und Hydroxyalkylester der Acrylsäure oder Methacrylsäure mit 2 bis 4 Kohlenstoffatomen im Hydroxyalkylrest wie z.B. 2-Hydroxyethyl-, 2-Hydroxypropyl-, 4-Hydroxybutyl, Trimethylolpropanmono- oder Pentaerythritmono-acrylat oder -methacrylat. Beliebige Gemische der beispielhaften genannten Monomeren können bei der Herstellung der hydroxyfunktionellen Polyacrylate selbstverständlich auch eingesetzt werden.

Im übrigen können als Komponente b2) beliebige Gemische der beispielhaft genannten Polyhydroxylverbindungen verwendet werden.

In den erfindungsgemäß eingesetzten Bindemitteln werden im übrigen die Mengenverhältnisse der Komponenten a), b1) und b2) so bemessen, daß das Äquivalentverhältnis von Isocyanatgruppen zu gegenüber Isocyanatgruppen reaktionsfähigen Gruppen bei 0,8:1 bis 20:1, vorzugsweise 0,8:1 bis 2:1 und insbesondere 0,8:1 bis 1,2:1 liegt. Die Menge der gegebenenfalls mitverwendeten Komponente b2) kann in weiten Bereichen variieren, so daß auf jede sekundäre Aminogruppe der Komponente b1) bis zu zu 20 Hydroxylgruppen der Komponente b2) entfallen. Vorzugsweise liegt im Falle der Mitverwendung von Ausgangskomponenten b2) das Äquivalentverhältnis von Aminogruppen der Komponente b1) Hydroxylgruppen der Komponente b2) bei 10:1 bis 1:10.

Die Herstellung der erfindungsgemäß einzusetzenden Bindemittel geschieht durch Abmischung der Einzelkomponenten, wobei, im Falle der Mitverwendung von Komponenten b2), diese auch mit der Komponente b1) vorab vermischt werden können. Im übrigen erfolgt die Herstellung der Bindemittel lösungsmittelfrei oder in Anwesenheit der in der Beschichtungstechnologie üblichen Lösungsmittel. Es ist ein Vorteil des erfindungsgemäßen Verfahrens, daß die dabei nötigen Lösungsmittelmengen gegenüber den

bekannten Zweikomponenten-Systemen wesentlich verringert werden können.

Brauchbare Lösungsmittel sind beispielsweise Xylol, Butylacetat, Methylisobutylketon, Methoxypropylacetat, N-Methylpyrrolidon, ®Solvesso, Benzin, i-Butanol, Butylglykol, Chlorbenzole oder Gemische derartiger Lösungsmittel, wobei alkoholische Lösungsmittel der beispielhaft genannten Art und unter der Voraussetzung in Betracht kommen, daß keine alkoholischen Bindemittelkomponenten b2) mitverwendet werden.

Im allgemeinen beträgt in den beim erfindungsgemäßen Verfahren einzusetzenden Beschichtungsmitteln das Gewichtsverhältnis der Gesamtmenge der Bindemittelkomponenten a), b1) und b2) zu Lösungsmittel 40:60 bis 100:0, vorzugsweise 60:40 bis 90:10.

In den beim erfindungsgemäßen Verfahren einzusetzenden Beschichtungsmitteln können auch andere, in der Beschichtungstechnologie übliche Hilfs- und Zusatzmittel enthalten sein. Hierzu gehören insbesondere Pigmente, Füllstoffe, Verlaufhilfsmittel, Katalysatoren, Antiabsetzmittel u. dgl.

Die Eigenschaften der beim erfindungsgemäßen Verfahren erhaltenen Überzüge können insbesondere durch geeignete Wahl von Art und Mengenverhältnissen der Ausgangskomponenten a), b1) und b2) eingestellt werden. So führt beispielsweise die Mitverwendung von höhermolekularen, linearen Polyhydroxylverbindungen in Form von Isocyanatgruppen aufweisenden Prepolymeren oder Semiprepolymeren und/oder als Komponente b2) zu einer Erhöhung der Elastizität der Überzüge. Ein Verzicht auf die Mitverwendung derartiger Aufbaukomponenten führt andererseits zu einer Erhöhung der Vernetzungsdichte und damit der Härte der resultierenden Lackfilme.

Zur Durchführung des erfindungsgemäßen Verfahrens werden die erfindungsgemäß zu verwendenden Beschichtungsmittel nach an sich bekannten Methoden, beispielsweise durch Spritzen, Streichen, Tauchen, Fluten oder mit Hilfe von Walzen oder Rakeln auf beliebige Substrate ein- oder mehrschichtig aufgetragen. Das erfindungsgemäße Verfahren eignet sich zur Herstellung von Oberzügen auf beliebigen Substraten, wie z.B. Metallen, Kunststoffen, Holz oder Glas. Besonders gut geeignet ist das erfindungsgemäße Verfahren zur Herstellung von Überzügen auf Stahlblechen, wie sie beispielsweise bei der Herstellung von Fahrzeugkarosserien, Maschinen, Verkleidungsblechen, Fässern oder Containern Verwendung finden. Die beim erfindungsgemäßen Verfahren zu beschichtenden Substrate können vor der Durchführung des erfindungsgemäßen Verfahrens mit geeigneten Grundierungen versehen sein.

Nach der Beschichtung der beispielhaft genannten Substrate werden bei der Durchführung des erfindungsgemäßen Verfahrens die aufgetragenen Überzüge bei Temperaturen von -20 bis 80 °C ausgehärtet. Vorzugsweise wird in einem Temperaturbereich von +10 bis +80 °C, also unter den Bedingungen der Lufttrocknung oder der sogenannten forcierten Trocknung ausgehärtet. Es ist jedoch für die Praxis von großer Bedeutung, daß auch bei höheren Temperaturen, wie sie z.B. bei Betriebsstörungen auf Lackieranlagen auftreten können, kein thermischer Abbau der Beschichtungen erfolgt.

Der mit dem erfindungsgemäßen Verfahren erreichbare Oberflächenschutz wird in den nachfolgenden Beispielen demonstriert. Alle Prozentangaben beziehen sich auf Gewichtsprozente.

<u>Beispiele</u>

In nachfolgenden Beispielen werden folgende Ausgangsmaterialien eingesetzt:

<u>Polyisocyanate a)</u>

<u>Polyisocyanat I:</u>

Handelsübliches Lackpolyisocyanat, erhalten durch Trimerisierung von Hexamethylendiisocyanat (90 %ige Lösung in Butylacetat/Solventnaphtha 100 (1:1), NCO-Gehalt der Lösung 19,4 %).

<u>Polyisocyanat II:</u>

50,1 % eines handelsüblichen lösungsmittelfreien Biurets aus Hexamethylendiisocyanat mit einem Isocyant-Gehalt von 22,0 % werden mit 14,9 % eines handelsüblichen lösungsmittelfreien Polyesters aus 43,8 % Phthalsäureanhydrid, 0,4 % Maleinsäureanhydrid, 16,9 % 1,6-Hexandiol, 31,2 % Dodecahydro-Bisphenol A und 7,7 % Trimethylolpropan in 35 % eines Lösemittelgemisches aus Solventnaphtha 100/Methoxipropylacetat 4:1 bei ca. 80 °C umgesetzt, bis ein NCO-Gehalt des Reaktionsgemisches von ca. 10,4 % erreicht ist.

Polyisocyanat III:

Handelsübliches Biuretpolyisocyanat auf Basis von Hexamethylendiisocyanat (75 %ige Lösung in Methoxypropylacetat/Xylol (1:1) mit einem NCO-Gehalt der Lösung von 16,5 %).

Herstellung von "Polyasparaginsäureestern" b1)

A) 170 g 1-Amino-3,3,5-trimethyl-5-aminomethyl-cyclohexan (IPDA) werden bei 30° C unter Rühren zu 344 g Maleinsäurediethylester getropft. Man läßt über Nacht bei Raumtemperatur nachrühren und erhält ein farbloses klares Proudkt mit einer Viskosität von ca. 500 mPa.s (23°C).

B) 88 g 1,4-Diaminobutan werden 50 %ig in Methanol gelöst und unter Rühren bei Raumtemperatur langsam in eine 50 %ige methanolische Lösung von 288 g Maleinsäuredimethylester getropft. Man läßt über Nacht bei Raumtemperatur nachrühren und erhält nach Entfernen des Lösungsmittels ein klares Produkt mit einer Viskosität von ca. 350 mPas (23°C). Das Äquivalent-Gewicht beträgt ca. 198 g/NH.

C) 116 g geschmolzenes 1,6-Diaminohexan werden bei Raumtemperatur unter Rühren zu 344 g Maleinsäurediethylester getropft. Nach ca. 6 Stunden bei derselben Temperatur ist die Reaktion beendet und man erhält ein klares farbloses Produkt mit einer Viskosität von ca. 100 mPas (23°C). das Äquivalent-Gewicht beträgt ca. 233 g/NH.

D) Zu 344 g Maleinsäurediethylester werden unter Rühren bei 0°C 238 g 3,3′-Dimethyl-4,4′-diaminodicyclohexylmethan (®Laromin C 260 der BASF AG) getropft. Man läßt über Nacht bei Raumtemperatur nachrühren und erhält ein farbloses klares Produkt mit einer Viskosität von ca. 1.000 mPas (23° C). Das Äquivalent-Gewicht beträgt ca. 295 g/NH.

E) 158 g eines Gemisches aus 2,2,4- und 2,4,4-Trimethyl-1,6-hexandiamin werden bei 30° C unter Rühren zu 344 g Maleinsäurediethylester getropft. Man läßt ca. 6 Stunden bei Raumtemperatur nachrühren und erhält ein klares farbloses Produkt mit einer Viskosität von ca. 150 mPas (23° C). Das Äquivalent-Gewicht beträgt ca. 254 g/NH.

F) 288 g Maleinsäurediethylester werden bei 60° C unter Rühren zu eienr 50 %igen methanolischen Lösung von 210 g 4,4′-Diaminodicyclohexylmethan getropft. Man läßt ca. 8 Stunden bei derselben Temperatur nachrühren und erhält nach Entfernen des Lösungsmittels ein klares Produkt mit einer Viskosität von ca. 6.500 mPas (23° C) und einem Äquivalent-Gewicht von 256 g/NH.

G) Zu 238 g 3,3-Dimethyl-4,4′-diamino-dicyclohexylmethan (®Laromin C 260 der BASF AG), 50 %ig in Methanol, werden unter Rühren bei 60° C 288 g Maleinsäuredimethylester getropft. Man rührt über Nacht bei derselben Temperatur nach und erhält nach Entfernen des Lösungsmittels ein klares Produkt mit einer Viskosität von ca. 3.500 mPas (23° C) und einem Äquivalent-Gewicht von ca. 273 g/NH.

H) 288 g Maleinsäuredimethylester werden bei 60°C unter Rühren zu einer 50 %igen methanolischen Lösung von 170 g Isophorondiamin getropft. Man läßt über Nacht bei derselben Temperatur nachrühren und erhält nach Entfernen des Lösungsmittels ein klares Produkt mit einer Viskosität von ca. 3.500 mPas (23°C) und einem Äquivalent-Gewicht von 236 g/NH.

I) 210 g 4,4′-Diamino-dicyclohexylmethan werden bei 30°C unter Rühren zu 344 g Maleinsäurediethylester getropft. Man läßt über Nacht bei Raumtemperatur nachrühren und erhält ein klares Produkt mit einer Viskosität von ca. 1.000 mPas (23°C). Das Äquivalent-Gewicht beträgt ca. 280 g/NH.

J) 88 g 1,4-Diaminobutan werden bei Raumtemperatur unter Rühren zu 344 g Maleinsäurediethylester getropft. Nach ca. 6 Stunden bei Raumtempteratur ist die Reaktion beendet und man erhält ein klares farbloses Produkt mit einer Viskosität von ca. 100 mPas (23°C) und einem Äquivalent-Gewicht von ca. 223 g/NH.

K) 62,5 g Amin (1) werden bei Raumtemperatur innerhalb von 2 Stunden zu 129 g Maleinsäurediethylester getropft und 6 Stunden bei 60°C nachgerührt. Man erhält ein klares Produkt, das praktisch farblos ist mit einer Viskosität von 2.100 mPas und einem Äquivalent-Gewicht von 277 g.

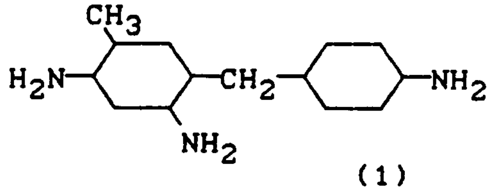

(1)

Polyhydroxylverbindungen b2)

Polyacrylatpolyol I:

Handelsübliches Polyacrylat-Polyol (®Desmophen A 365, Bayer AG) in Form einer 65 %igen Lösung in Butylacetat/Xylol (3:1), OH-Gehalt der Lösung: 2,8 %.

Polyacrylatpolyesterpolyol II

75 %ige Lösung in Xylol mit einem Hydroxylgruppengehalt von 3,92 % aus 42 % eines Copolymerisats mit einem Gehalt an Hydroxylgruppen von 5,45 % und an Carboxylgruppen von 1,2 % aus

38,8 % Hydroxylpropylmethacrylat
21,6 % Styrol
21,6 % Methylmethacrylat
16 % Butylacrylat
2 % Acrylsäure

und 28 % eines Polyesterpolyols mit einem Gehalt an Hydroxylgruppen von 4,85 %, hergestellt durch Umsetzung von

19,5 % 2-Ethylhexansäure
41,2 % Trimethylolpropan
28,5 % Heyahydrophthalsäureanhydrid
10,8 % Adipinsäure

Polyesterpolyol III:

Polyesterpolyol mit einem Hydroxylgruppengehalt von 4,28 %, hergestellt durch Umsetzung von

32,9 % Trimethylolpropan
10,6 % 2-Ethylhexansäure
10,6 % Benzoesäure
23,8 % Hexahydrophthalsäureanhydrid
2,1 % Maleinsäureanhydrid
20 % Methoxypropylacetat (MPA)

Beispiel 1

216 g Polyisocyanat I und 257 g Polyasparaginsäureester A) werden mit 91 g eines Lösungsmittelgemischs (MPA/Ethylacetat/Butylacetat/Toluol 1:1:1:1) vermischt. Das Äquivalentverhältnis von Isocyanatgruppen zu sekundären Aminogruppen liegt bei 1:1.

Dieser Klarlack, der die für eine praxisgerechte Verarbeitung notwendige Auslaufzeit (nach DIN 53 211) von 25 Sek. aufweist, wird mit einer Rakel auf eine Glasplatte appliziert und unter den in der Tabelle angegebenen Bedingungen getrocknet.

Die hieraus resultierenden Filmeigenschaften sind denen des im nachfolgenden Vergleichsbeispiel beschriebenen herkömmlichen Lacksystems in der Tabelle gegenübergestellt.

Beispiel 2 (Vergleichsbeispiel)

216 g Polyisocyanat I und 607 g Polyacrylatpolyol I werden mit 355 g des in Beispiel 1 beschriebenen Lösungsmittelgemisches vermischt.

Dieser Klarlack, der die für eine praxisgerechte Verarbeitung notwendige Auslaufzeit (nach DIN 53 211) von 25 Sek. aufweist, wird mit einer Rakel auf eine Glasplatte appliziert und unter den in der Tabelle angegebenen Bedingungen getrocknet.

In der Tabelle 1 sind die Filmeigenschaften denen des beanspruchten erfindungsgemäßen Verfahrens gegenübergestellt.

Tabelle 1

| | Beispiel 1 | Beispiel 2 |
|---|---|---|
| Auslaufzeit (DIN 53 211) | 25" | 25" |
| Festkörpergehalt | 80 % | 50 % |
| Standzeit | 1,8 h | 3,5 h |
| Sandtrocknung | 1 h | 3 h |
| Grifftrocknung | 2 h | 4 h |
| Pendelhärte (DIN 53 157) | | |
| nach 1 d RT | 163" | 70" |
| nach 2 d RT | 168" | 111" |
| nach 30' 60° C | 152" | 72" |
| und 1 d RT | 200" | 135" |
| und 2 d RT | 205" | 154" |
| Lösemittelfestigkeiten* | | |
| Toluol/MPA/Ethylacetat/Aceton | | |
| 1' nach 1 d RT | 1/1/3/4 | 4/3/4/4 |
| 5' nach 1 d RT | 2/2/4/4 | 4/3/4/4 |
| 1' nach 2 d RT | 1/1/2/4 | 2/2/2/4 |
| 5' nach 2 d RT | 2/2/4/4 | 4/3/4/4 |

* Der Test besteht in einer 1- bzw. 5 minütigen Einwirkung eines Lösungsmittel-getränkten Wattebausch auf die Lackoberfläche (0 = Film unverändert; 5 = Film zerstört).

Beispiele 3 bis 5

Analog Beispiel 1 werden aus Polyisocyanat I und den Polyasparaginsäureestern F), H) und I) Klarlacke unter Einhaltung eines Äquivalentverhältnisses von NCO/NH von 1:1 formuliert. Die Eigenschaften der mit Rakeln auf Bleche applizierten Überzüge werden in Tabelle 2 zusammengefaßt.

Beispiele 6 bis 10

Aus Polyisocyanat I und den Polyasparaginsäureestern B), C), D), E) und G) werden die in Tabelle 3 beschriebenen Klarlacke formuliert.

Beispiele 11 bis 13

Polyisocyanat II und die Polyasparaginsäureester B), C) und J) werden in äquivalenten Mengen vermischt und auf Glasplatten in ca. 1 mm Schichtdicke aufgetragen. Es entstehen klare elastische Filme, die die in der Tabelle 4 aufgeführten Härten zeigen.

T a b e l l e 2

| | Beispiel 3 | Beispiel 4 | Beispiel 5 |
|---|---|---|---|
| FK | 50 % | 50 % | 50 % |
| Auslaufzeit (DIN 53 211) | 12" | 11" | 12" |
| Standzeit | 2,3 h | 1,6 h | 7,0 h |
| Sandtrocknung | 1,5 h | 1 h | 1 h |
| Grifftrocknung | 1,5 h | 1,5 h | 2 h |
| Schichtdicke | 40 µm | 40 µm | 40 µm |
| Pendelhärten (DIN 53 157) | | | |
| nach 1 d RT | 178" | 181" | 180" |
| nach 2 d RT | 181" | 195" | 180" |
| nach 30' 60°C + 1 d RT | 184" | 192" | 187" |
| Lösemittelfestigkeiten* | | | |
| Toluol/MPA/Ethylacetat/Aceton | | | |
| 1' nach 1 d RT | 0/0/1/4 | 0/0/1/4 | 0/1/3/4 |
| 5' nach 1 d RT | 1/0/3/4 | 1/0/3/4 | 1/1/4/4 |
| 1' nach 7 d RT | 0/0/1/3 | 0/0/0/3 | 0/0/1/4 |
| 5' nach 7 d RT | 1/0/1/4 | 0/0/2/4 | 1/1/4/4 |
| Erichsen Wert (DIN 53 156) | | | |
| nach 7 d RT | 7,5 | 8,0 | 8,8 |
| nach 30' 60°C + 7 d RT | 10,0 | 9,5 | 9,5 |

* Der Test besteht in einer 1- bzw. 5 minütigen Einwirkung eines Lösungsmittel-getränkten Wattebausches auf die Lackoberfläche (0 = Film unverändert; 5 = Film zerstört).

T a b e l l e 3

| Beispiel | Polyasparaginsäureester | Polyisocyanat | NCO/NH-Verhältnis | Festk.-Gehalt | Gelierzeit | Bleistifthärte nach 1 d RT | Lösemittelfestigkeit 1' *) nach 1 d RT |
|---|---|---|---|---|---|---|---|
| 6 | B) | I | 1,0 | 60 % | 1 min | H | 0 0 4 4 |
| 7 | C) | I | 1,0 | 90 % | 1 min | 2 H | 0 0 4 4 |
| 8 | D) | I | 1,0 | 90 % | 6 h | 2 H | 0 1 4 4 |
| 9 | E) | I | 1,0 | 75 % | 10 min | H | 1 0 4 4 |
| 10 | G) | I | 1,0 | 60 % | 10 h | 2 H | 0 1 4 4 |

*) siehe Tabelle zu Beispiel 1

Tabelle 4

| Beispiel | Polyasparaginsäureester | Polyisocyanat | NCO/NH-Verhältnis | Festkörper Gehalt | Shore A-Härte nach 1 d RT | nach 7 d RT |
|---|---|---|---|---|---|---|
| 11 | B) | II | 1,0 | 77 % | 75 | 80 |
| 12 | C) | II | 1,0 | 77 % | 75 | 80 |
| 13 | J) | II | 1,0 | 77 % | 70 | 75 |

Die Lacke der Beispiele 14 bis 21 werden mit einer Rakel auf Glasplatten appliziert.

Beispiel 14

Der Polyasparaginsäureester H) wird mit dem Polyacrylat-Polyesterpolyol II) im Gewichtsverhältnis (bez. auf Festkörper) 1:1 abgemischt und mit Polyisocyanat I in äquivalentem Verhältnis (NCO/NH + OH =

1,0) ausgehärtet. Der Festkörpergehalt des Lackes wird mit dem in Beispiel 1) genannten Lösemitelgemisch eingestellt.

Beispiel 15 (Vergleichsbeispiel zu Bsp. 14)

Polyisocyanat I wird mit dem Polyacrylatpolyesterpolyol II im Equivalent-Verhältnis NCO/OH = 1,0 zu einem Klarlack abgemischt und mit dem in Beisp. 1) genannten Lösemittelgemisch auf einen Festkörpergehalt von 60 % eingestellt.

| | Beispiel 14 | Beispiel 15 |
|---|---|---|
| Festkörpergehalt | 60 % | 60 % |
| Auslaufzeit (DIN 53 211) | 15 sec | 20 sec |
| Sandtrocknung | 25 min | > 5 h |
| Grifftrocknung | 2 h | > 6 h |
| Lösemittelfestigkeit 1'*) | | |
| nach 7 d RT | 0 0 4 4 | 3 1 5 5 |

*) siehe Tabelle zu Beispiel 1

Beispiel 16

2-Komponentenlack aus dem Polyasparaginsäureester F), dem Polyacrylat-Polyester-Polyol II) und der Polyisocyanatkomponene III analog Beispiel 14).

Beispiel 17 (Vergleichsbeispiel zu Bsp. 16).

Lackformulierung aus der Polyisocyanatkomponente III und dem Polyacrylatpolyesterpolyol II analog Bsp. 15).

| | Beispiel 16 | Beispiel 17 |
|---|---|---|
| Festkörpergehalt | 60 % | 60 % |
| Auslaufzeit (DIN 53 211) | 20 sec | 29 sec |
| Sandtrocknung | 25 min | 7,5 h |
| Grifftrocknung | 35 min | 7,5 h |
| Lösemittelfestigkeit 1'*) | | |
| nach 3 d RT | 1 0 4 4 | 3 3 5 5 |

*) siehe Tabelle zu Bsp. 1

Beispiel 18

Der Polyasparaginsäureester F) wird mit Polyesterpolyol III im Gewichtsverhältnis (bez. auf Festkörper) 1:9 abgemischt und mit Polyisocyanat I in equivalentem Verhältnis (NCO/NH + OH = 1,0) ausgehärtet. Der Festkörpergehalt wird analog Bsp. 14) eingestellt.

Beispiel 19 (Vergleichsbeispiel zu Bsp. 18)

Lackformulierung aus Polyisocyanat I und Polyesterpolyol III analog Beispiel 15).

| | Beispiel 18 | Beispiel 19 |
|---|---|---|
| Festkörpergehalt | 60 % | 60 % |
| Auslaufzeit (DIN 53 211) | 15 sec | 17 sec |
| Sandtrocknung | 15 min | 6 h |
| Grifftrocknung | 3,5 h | 7 h |
| Pendelhärte (DIN 53 157) | | |
| nach 40' 80°C + 1 d RT | 175 | 173 |
| nach 40' 80°C + 7 d RT | 176 | 174 |
| Lösemittelfestigkeit 1'*) | | |
| nach 40' 80°C + 1 d RT | 0 0 3 3 | 2 1 4 5 |
| nach 40' 80°C + 7 d RT | 0 0 1 5 | 0 0 4 4 |

*) s. Tabelle zu Bsp. 1)

Beispiel 20

Der Polyasparaginsäureester I) wird mit Polyesterpolyol III im Gewichtsverhältnis (bez. auf Festkörper) 9:1 abgemischt und mit Polyisocyanat I in equivalentem Verhältnis (NCO/NH + OH = 1,0) ausgehärtet. Der Festkörpergehalt wird analog Bsp. 1) eingestellt.

Beispiel 21 (Vergleichsbeispiel zu Bsp. 20)

Lackformulierung aus Polyisocyanatkomponente III und Polyesterpolyol III analog Beispiel 15).

| | Beispiel 20 | Beispiel 21 |
|---|---|---|
| Festkörpergehalt | 60 % | 60 % |
| Auslaufzeit (DIN 53 211) | 13 sec | 17 sec |
| Sandtrocknung | 35 min | 6 h |
| Grifftrocknung | 50 min | 7 h |
| Lösemittelfestigkeit 1'*) | | |
| nach 1 d RT | 0 0 4 4 | 1 1 2 5 |

*) s. Tabelle zu Beispiel 1

## Patentansprüche

1. Verfahren zur Herstellung von Überzügen durch Beschichtung beliebiger Substrate mit einem Beschichtungsmittel, welches als Bindemittel ein Zweikomponenten-System aus
   a) einer Polyisocyanatkomponente und
   b) einer gegenüber Polyisocyanaten reaktionsfähigen Reaktivkomponente,
   sowie gegebenenfalls die aus der Beschichtungstechnologie bekannten Hilfs- und Zusatzmittel enthält, dadurch gekennzeichnet, daß die Bindemittelkomponente b) aus
   b1) Verbindungen der allgemeinen Formel

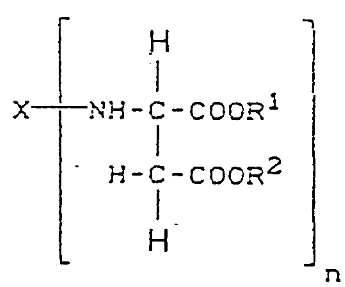

   oder aus Gemischen derartiger Verbindungen mit
   b2) aus der Polyurethanchemie an sich bekannten, Hydroxylgruppen aufweisenden Verbindungen in einer solchen Menge, daß auf jede sekundäre Aminogruppe der Komponente b1) bis zu 20 Hydroxylgruppen entfallen,
   besteht, wobei das Äquivalentverhältnis von Isocyanatgruppen zu gegenüber Isocyanatgruppen reaktionsfähigen Gruppen bei 0,8 : 1 bis 20 : 1 liegt und die Aushärtung nach erfolgter Applikation auf dem Substrat bei Temperaturen von -20 bis +80° C erfolgt, wobei in der genannten allgemeinen Formel
   X für einen n-wertigen organischen Rest steht, der durch Entfernung der Aminogruppen aus einem Polyamin, ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan,1,11-Diaminoundecan, 1,12-Diaminododecan, 1-Amino-3,3,5-trimethyl-5-aminomethyl-cyclohexan, 2,4- und/oder 2,6-Hexahydrotoluylendiamin, 2,4'- und/oder 4,4'-Diamino-dicyclohexylmethan, 3,3'-Dimethyl-4,4'-diamino-dicyclohexylmethan, 2,4,4'-Triamino-5-methyl-dicyclohexylmethan und

Polyetherpolyaminen mit aliphatisch gebundenen primären Aminogruppen und mit einem Molekulargewicht von 148 bis 6000 erhalten werden kann,

$R^1$ und $R^2$ für gleiche oder verschiedene organische Reste stehen, die unter den Reaktionsbedingungen gegenüber Isocyanatgruppen inert sind und mit der Maßgabe, daß $R^1$ und $R^2$ Ethyl sind, wenn X für den Rest steht, der durch Entfernung der Aminogruppen aus 2,4,4'-Triamino-5-methyl-dicyclohexylmethan erhalten worden ist,

n für eine ganze Zahl von mindestens 2 steht.

**2.** Verfahren gemäß Anspruch 1, dadurch gekennzeichnet, daß man als Komponente b1) Verbindungen der genannten allgemeinen Formel verwendet, für welche $R^1$ und $R^2$ für eine Methyl- oder Ethylgruppe stehen.

**3.** Verfahren gemäß Anspruch 1 und 2, dadurch gekennzeichnet, daß man als Verbindung b1) solche der in Anspruch 1 genannten allgemeinen Formel verwendet, für welche X für den Rest steht, wie er durch Entfernung der Aminogruppen aus 1,4-Diaminobutan, 1,6-Diaminohexan, 2,2,4- und/oder 2,4,4-Trimethyl-1,6-diaminohexan, 1-Amino-3,3,5-trimethyl-5-aminomethyl-cyclohexan, 4,4'-Diamino-dicyclohexylmethan oder 3,3'-Dimethyl-4,4'-diamino-dicyclohexylmethan erhalten wird und n für die Zahl 2 steht.

**4.** Verfahren gemäß Anspruch 1 bis 3, dadurch gekennzeichnet, daß man als Komponente b2) Copolymerisate des Molekulargewichtsbereichs Mn 800 bis 50.000 und einem Hydroxylgruppengehalt von 0,1 bis 12 Gew.-% von Hydroxyalkylestern der Acrylsäure und/oder Methacrylsäure mit anderen olefinisch ungesättigten Monomeren verwendet.

**5.** Verfahren gemäß Anspruch 1 bis 4, dadurch gekennzeichnet, daß man lösungsmittelarme Beschichtungsmittel verwendet, bei denen das Gewichtsverhältnis von, aus den Einzelkomponenten a) und b) bestehendem Bindemittel zu Lösungsmittel bei 60:40 bis 90:10 liegt.

**6.** Verfahren gemäß Anspruch 1 bis 5, dadurch gekennzeichnet, daß die Aushärtung auf dem Substrat innerhalb des Temperaturbereichs von 10 bis 80 °C erfolgt.

## Claims

**1.** Process for the production of coatings by the coating of any substrate with a coating agent, which contains as binder a two-component system of

a) a polyisocyanate component and

b) a reactive component reactive towards polyisocyanates,

as well as optionally the auxiliary substances and additives known from coating technology,

characterised in that the binder component b) comprises

b1) compounds of the general formula

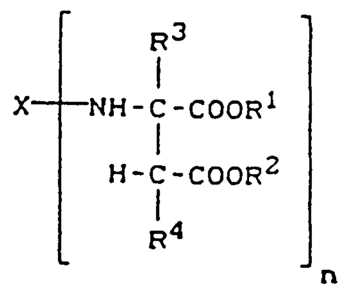

or mixtures of such compounds with

b2) compounds known per se from polyurethane chemistry, having hydroxyl groups in such an amount that up to 20 hydroxyl groups are present for each secondary amino group of component b1),

wherein the equivalent ratio of isocyanate groups to groups reactive towards isocyanate groups is 0.8:1 to 20:1 and the curing occurs after application to the substrate has taken place at temperatures of -20

to + 80 °C, wherein in the aforementioned general formula

X represents an n-valent organic group that can be obtained by removal of the amino groups from a polyamine selected from the group consisting of ethylenediamine, 1,2-diaminopropane, 1,4-diaminobutane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1-amino-3,3,5-trimethyl-5-aminomethylcyclohexane, 2,4-and/or 2,6-hexahydrotolylenediamine, 2,4'-and/or 4,4'-diaminodicyclohexylmethane, 3,3'-dimethyl-4,4'-diaminodicyclohexylmethane, 2,4,4'-triamino-5-methyl-dicyclohexylmethane and polyetherpolyamines with aliphatically bonded primary amino groups and with a molecular weight of 148 to 6000,

$R^1$ and $R^2$ represent the same or different organic groups that are inert towards isocyanate groups under the reaction conditions, with the proviso that $R^1$ and $R^2$ are ethyl when X represents the group that has been obtained by removal of the amino groups from 2,4,4'-triamino-5-methyl-dicyclohexylmethane, and

n represents a whole number of at least 2.

**2.** Process according to Claim 1, characterised in that as component b1) compounds of the aforementioned general formula for which $R^1$ and $R^2$ represent a methyl or ethyl group are used.

**3.** Process according to Claims 1 and 2, characterised in that as compound b1) those of the general formula aforementioned in Claim 1 are used for which X represents the group obtained by removal of the amino groups from 1,4-diaminobutane, 1,6-diaminohexane, 2,2,4- and/or 2,4,4-trimethyl-1,6-diaminohexane, 1-amino-3,3-5-trimethyl-5-aminomethylcyclohexane, 4,4'-diaminodicyclohexylmethane or 3,3'-dimethyl-4,4'-diaminodicyclohexylmethane and n represents the number 2.

**4.** Process according to Claims 1 to 3, characterised in that copolymers of hydroxyalkyl esters of acrylic acid and/or methacrylic acid with other olefinically unsaturated monomers are used as component b2), the copolymers having a molecular weight Mn in the range 800 to 50,000 and a hydroxyl group content of 0.1 to 12 wt%.

**5.** Process according to Claims 1 to 4, characterised in that coating agents of low solvent content are used, for which the weight ratio of binder comprising the individual components a) and b) to solvent is 60:40 to 90:10.

**6.** Process according to Claims 1 to 5, characterised in that the curing takes place on the substrate in the temperature range of 10 to 80 °C.

**Revendications**

**1.** Procédé pour la préparation de revêtements par enduction de n'importe quels substrats à l'aide d'un agent d'enduction qui contient, comme liant, un système à deux composants constitué par

a) un composant de polyisocyanate, et

b) un composant réactif apte à réagir vis-à-vis de polyisocyanates,

ainsi qu'éventuellement les adjuvants et les additifs connus de la technologie de l'enduction, caractérisé en ce que le composant de liant b) est constitué par

b1) des composés répondant à la formule générale

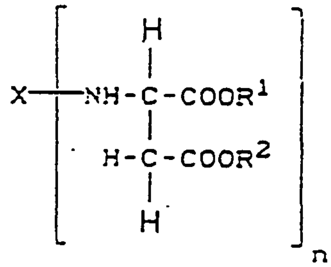

ou des mélanges de composés de ce type avec

b2) des composés présentant des groupes hydroxyle, connus en soi de la chimie des polyuréthannes, en une quantité telle que, pour chaque groupe amino secondaire du composant b1), on obtient jusqu'à 20 groupes hydroxyle,

dans lequel le rapport d'équivalent des groupes isocyanate aux groupes aptes à réagir vis-à-vis d'isocyanates se situe de 0,8:1 à 20:1, et le durcissement se produit, après qu'a eu lieu l'application sur le substrat, à des températures de -20 à +80°C, dans lequel, dans la formule générale mentionnée

X représente un radical organique n valent, que l'on peut obtenir par élimination des groupes amino d'une polyamine choisie parmi le groupe constitué par l'éthylènediamine, le 1,2-diaminopropane, le 1,4-diaminobutane, le 1,6-diaminohexane, le 2,5-diamino-2,5-diméthylhexane, le 2,2,4- et/ou 2,4,4-triméthyl-1,6-diaminohexane, le 1,11-diaminoundécane, le 1,12-diaminododécane, le 1-amino-3,3,5-triméthyl-5-aminométhyl-cyclohexane, la 2,4- et/ou 2,6-hexahydrotoluylènediamine, le 2,4'- et/ou 4,4'-diaminodicyclohexylméthane, le 3,3'-diméthyl-4,4'-diamino-dicyclohexylméthane, le 2,4,4'-triamino-5-méthyl-dicyclohexylméthane et des polyétherpolyamines contenant des groupes amino primaires liés à des radicaux aliphatiques et ayant un poids moléculaire de 148 à 6000,

$R^1$ et $R^2$ représentent des radicaux organiques identiques ou différents qui sont inertes vis-à-vis de groupes isocyanate dans les conditions réactionnelles et avec cette mesure que $R^1$ et $R^2$ représentent un groupe éthyle lorsque X représente le radical que l'on obtient par élimination des groupes amino du 2,4,4'-triamino-5-méthyl-dicyclohexylméthane, et

n représente un entier d'au moins 2.

**2.** Procédé selon la revendication 1, caractérisé en ce que, comme composant b1), on utilise des composés répondant à la formule générale mentionnée, pour lesquels $R^1$ et $R^2$ représentent un groupe méthyle ou un groupe éthyle.

**3.** Procédé selon les revendications 1 et 2, caractérisé en ce que, comme composant b1), on utilise un composé tel que répondant à la formule générale mentionnée à la revendication 1, pour lequel X représente le radical tel qu'on l'obtient par élimination des groupes amino du 1,4-diaminobutane, du 1,6-diaminohexane, du 2,2,4- et/ou 2,4,4-triméthyl-1,6-diaminohexane, du 1-amino-3,3,5-triméthyl-5-aminométhyl-cyclohexane, du 4,4'-diaminodicyclohexylméthane ou du 3,3'-diméthyl-4,4'-diamino-dicyclohexylméthane et n représente le nombre 2.

**4.** Procédé selon les revendications 1 à 3, caractérisé en ce que, comme composant b2), on utilise des copolymères du domaine de poids moléculaire Mn de 800 à 50.000 et ayant une teneur en groupes hydroxyle de 0,1 à 12 % en poids d'esters hydroxyalkyliques d'acide acrylique et/ou méthacrylique avec d'autres monomères à insaturation oléfinique.

**5.** Procédé selon les revendications 1 à 4, caractérisé en ce qu'on utilise des agents d'enduction pauvres en solvants, dans lesquels le rapport pondéral du liant constitué par les composants individuels a) et b) au solvant se situe de 60:40 à 90:10.

**6.** Procédé selon les revendications 1 à 5, caractérisé en ce que le durcissement sur le substrat a lieu dans le domaine de température de 10 à 80°C.